# EUROPÄISCHE PATENTSCHRIFT

(11) **EP 0 704 450 B1**
(45) Veröffentlichungstag und Bekanntmachung des Hinweises auf die Patenterteilung: **26.01.2000**
(21) Anmeldenummer: 95114851.9
(22) Anmeldetag: 21.09.1995
(51) Int. Cl.: C07F 9/50

(54) **Neue sulfonierte Phosphine, Verfahren zu ihrer Herstellung und ihre Verwendung als Bestandteil von Katalysatorsystemen**
Novel sulfonated phosphines, process for their preparation and their use as constituents of catalyst systems
Nouvelles phosphines sulfonées, leur procédé de préparation et leur utilisation comme constituants de systèmes de catalyseurs

(30) Priorität: 30.09.1994 DE 4435189
(43) Veröffentlichungstag der Anmeldung: 03.04.1996
(73) Patentinhaber: Celanese Chemicals Europe GmbH, 60439 Frankfurt am Main (DE)
(72) Erfinder: Albanese, Guido, D-80993 München (DE); Manetsberger, Rainer, Dr., D-82407 Wielenbach (DE); Herrmann, Wolfgang A., Prof. Dr., D-85354 Freising (DE)

(56) Entgegenhaltungen:
- EP-A- 0 435 073
- EP-A- 0 632 047
- DE-A- 4 410 746
- ANGEW. CHEM., INT. ED. ENGL. (ACIEAY,05700833);95; VOL.34 (7); PP.811-13, UNIV. MUENCHEN;ANORGANISH-CHEMISCHES INST. TECHNISCHEN; GARCHING; D-85747; GERMANY (DE), HERRMANN W A ET AL 'Water-soluble metal complexes and catalysts. 8. New process for the sulfonation of phosphine ligands for catalysts'

## Beschreibung

Die Erfindung betrifft neue sulfonierte Phosphine und Verfahren zu ihrer Herstellung sowie die Verwendung dieser Verbindungen als Bestandteil wasserlöslicher Katalysatorsysteme, insbesondere für Reaktionen, in denen C-C-Bindungen aufgebaut werden.

Komplexverbindungen, die als Zentralatom ein Metall der 8. Gruppe des Periodensystems der Elemente und als Liganden P(III)-Verbindungen, nämlich Phosphine oder Phosphite und daneben gegebenenfalls noch weitere, zur Komplexbildung befähigte Gruppen enthalten, finden in den letzten Jahren zunehmend Anwendung als Katalysatoren für organisch-chemische Synthesen. So erfolgt die technisch in großem Umfang ausgeübte Reaktion von Olefinen mit Synthesegas zu Aldehyden (Hydroformylierung) in Gegenwart von Katalysatorsystemen, die aus Kobalt und insbesondere Rhodium und Triphenylphosphin bestehen. Auch zur Umsetzung von Methanol mit Synthesegas zu höheren Alkoholen, insbesondere Ethanol und Propanol (Homologisierung) haben sich Katalysatoren auf Basis von Phosphin enthaltenden Komplexverbindungen bewährt. Zumeist liegen in den genannten Fällen die Liganden im Überschuß vor, so daß das Katalysatorsystem aus Komplexverbindung und freiem Ligand besteht. Entsprechend der Löslichkeit der Katalysatoren in organischen Medien erfolgen die Reaktionen in homogener Phase.

Statt in homogener Phase kann man die Umsetzung auch im heterogenen Reaktionssystem durchführen. Vorteil dieser Verfahrensvariante ist die einfache und schonende Trennung des in Wasser gelösten Katalysators, von dem in Wasser nicht löslichen Reaktionsprodukt. Nach diesem Prinzip arbeitet z.B. das in der DE-C2 27 00 904 beschriebene Verfahren zur Herstellung von Nitrilen durch Anlagerung von Cyanwasserstoff an ungesättigte organische Verbindungen, die mindestens eine ethylenische Doppelbindung enthalten. Für die Herstellung von Aldehyden durch Reaktion von Olefinen mit Kohlenmonoxid und Wasserstoff setzt man nach dem Prozeß der DE-C2 26 27 354 Rhodium in metallischer Form oder in Form seiner Verbindungen zusammen mit einem wasserlöslichen Phosphin, z.B. dem Alkalisalz des Tri(m-sulfonatophenyl)phosphins ("TPPTS") als Katalysator ein. Weitere Beispiele für Umsetzungen mit heterogener Katalysatorphase finden sich in Angew. Chem. 1993, 105, 1588 ff.

Die bekannten Zweiphasen-Verfahren haben sich in technischem Maßstab sehr gut bewährt. Arbeiten aus jüngerer Zeit dienen einer weiteren Vervollkommnung der Prozesse. So versucht man, die Aktivität der Katalysatoren durch Modifizieren der Komplexliganden zu erhöhen und ihre Wirksamkeit zu verlängern, um den spezifischen Katalysatorbedarf - sowohl Metall als auch Ligand - und damit die Produktionskosten, weiter zu senken. Wirtschaftliche Gründe sind auch dafür maßgebend, auf eine deutliche Verminderung des Phosphin/Metall-Verhältnisses hinzuarbeiten. Schließlich bemüht man sich, Ligandensysteme zu entwickeln, die im Rahmen bekannter Verfahren individuelle, z.B. produktspezifische Probleme lösen und darüber hinaus sucht man neue Anwendungsgebiete für diese vielseitigen Katalysatorsysteme.

Gegenstand der Erfindung sind sulfonierte Phosphine der allgemeinen Formel 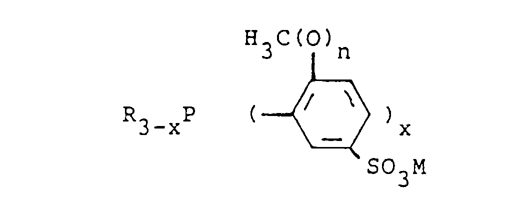 in der R einen Alkylrest mit 1 bis 4 Kohlenstoffatomen oder den Cyclohexylrest bedeutet, M Wasserstoff, ein einwertiges Metall, das chemische Äquivalent eines mehrwertigen Metalls, das Ammoniumion oder ein alkyl- oder arylsubstituiertes Ammoniumion ist und x für die Zahlen 1, 2 oder 3 sowie n für die Zahlen 0 oder 1 stehen.

Die durch R wiedergegebenen C₁- bis C₄-Alkylreste können geradkettig oder verzweigt sein. Die Dialkylverbindungen enthalten bevorzugt gleiche Alkylreste oder zwei Cyclohexylreste, jedoch sind Verbindungen mit unterschiedlichen Alkylresten oder einem Alkyl- und einem Cyclohexylrest nicht ausgeschlossen. M ist vorzugsweise Wasserstoff, ein Alkalimetall, insbesondere Natrium oder Kalium, das chemische Äquivalent eines Erdalkalimetalls wie Magnesium oder Calcium, das Ammoniumion oder ein Tetraalkylammoniumion.

Ein weiterer Gegenstand der Erfindung ist ein Verfahren zur Herstellung der vorstehend beschriebenen Phosphine.

Weiterhin betrifft die Erfindung die Verwendung der neuen Verbindungen als Bestandteil von Katalysatorsystemen in Reaktionen, die zum Aufbau von C-C-Bindungen führen, wie die Dien-Hydrodimerisierung, die Alkylierung C-H-acider Verbindungen, Additionsreaktionen an C-C-Doppelbindungen und die Carbonylierung von Allylsystemen.

Zur Herstellung der beanspruchten Phosphine geht man von Tris(o-tolyl)phosphin oder Tris(o-methoxyphenyl)phosphin bzw. von Derivaten dieser Verbindungen als Grundkörpern aus, in denen ein oder zwei Arylreste durch Alkylreste mit 1 bis 4 Kohlenstoffatomen oder den Cyclohexylrest ersetzt sind. Man erhält die Phosphine nach einer oder in Anlehnung an eine in J. Org. Chem. 43, 2941 ff (1978) veröffentlichten Vorschrift durch Umsetzung von Phosphortrichlorid bzw. Alkylchlorophosphinen mit dem Grignardreagenz aus o-Bromtoluol bzw. o-Brommethoxybenzol.

Zur Sulfonierung können die Phosphine ohne vorherige Reinigung eingesetzt werden. Als Sulfonierungsmittel verwendet man erfindungsgemäß das wasserfreie System Schwefelsäure/Orthoborsäure (wobei je mol P(III) mindestens ein mol Orthoborsäure vorliegt) oder Oleum, d.h. eine Lösung von SO₃ in Schwefelsäure. Zweckmäßig beträgt die SO₃-Konzentration in dieser Lösung 20 bis 65 Gew.-%, bezogen auf die Lösung. Um die Bildung von Phosphinoxiden zu vermeiden und höhere Reaktionstemperaturen zu ermöglichen, kann man nach einer bevorzugten Ausführungsform dem Oleum eine Lewis-Säure, z.B. Borsäure, in einer solchen Menge zusetzen, daß je mol Phosphin mindestens ein mol Borsäure vorliegt. Die Phosphorverbindung wird anteilsweise bei 20 bis 120°C in das System Schwefelsäure/Orthoborsäure bzw. bei 0 bis 20, vorzugsweise von 0 bis 5°C (bzw. 0 bis 40°, insbesondere 0 bis 20°C in Gegenwart einer Lewis-Säure) in das Oleum eingetragen. Unter Rühren stellt man darauf die Sulfonierungstemperatur ein, die bei Verwendung von Schwefelsäure/Orthoborsäure 20 bis 350°C beträgt, bei Verwendung von Oleum die für den Lösungsvorgang genannten Temperaturbereiche nicht überschreitet und läßt 1 bis 3 d nachreagieren. Aus dem Reaktionsgemisch werden darauf die sulfonierten Phosphine durch einen Extraktions-Reextraktionsprozeß isoliert.

Hierzu verdünnt man das Gemisch mit soviel Wasser oder, bei Verwendung von Oleum als Sulfonierungsreagenz, besser mit Eis, daß die Schwefelsäurekonzentration in der erhaltenen Lösung 0,5 bis 50 Gew.-%, vorzugsweise 25 bis 35 Gew.-% beträgt. Anschließend wird das Hydrolysat mit der Lösung eines wasserunlöslichen Amins in einem wasserunlöslichen Lösungsmittel, z.B. mit Triisooctylamin in Toluol extrahiert, wobei je chemisches Äquivalent Sulfonsäure 0,5 bis 3 mol des Amins angewandt werden. Das sulfonierte Phosphin geht als Aminsalz in die organische Phase über. Es wird durch Reextraktion mit einer wäßrigen Alkalihydroxidlösung als wäßrige Lösung des entsprechenden Alkalisalzes gewonnen, aus der man nach Einengen zur Trockne das Phosphinsulfonat erhält.

Die neuen sulfonierten Phosphine sind farblose Pulver, die sich sehr leicht in Wasser lösen. Aus den Natriumsalzen, wie auch aus anderen Alkalisalzen, können z.B. durch Ionenaustausch, die freie Säure und auch die Salze anderer Metalle hergestellt werden.

Die Phosphine bilden mit verschiedenen Metallen Komplexverbindungen, unter denen insbesondere die mit Ni, Pd und Pt Bedeutung als Katalysatoren für C-C-Kupplungsreaktionen haben. Zweckmäßig werden hierbei Metall und Phosphorverbindung (in Form ihrer Natriumsalze oder eines anderen wasserlöslichen Salzes) nicht in stöchiometrischem Verhältnis, also entsprechend der chemischen Zusammensetzung der ursprünglich eingesetzten oder sich unter Reaktionsbedingungen bildenden Metall-Komplexverbindung verwendet. Vorteilhafter ist es, mit einem Phosphinüberschuß zu arbeiten. Dabei kann man das Verhältnis von Metall und Phosphin in weiten Grenzen variieren und je mol Metall etwa 1 bis 4 mol Phosphin anwenden. Bevorzugt wird ein Verhältnis von 1 mol Metall zu 1 bis 2 und insbesondere 2 mol Phosphin.

Die Metalle gelangen in elementarer Form oder als Verbindungen zum Einsatz. Elementar verwendet man sie entweder in Form feinverteilter Partikel, vorteilhaft kolloidal oder in dünner Schicht auf einem Träger wie Aktivkohle, Calciumcarbonat, Aluminiumsilikat, Tonerde, niedergeschlagen. Als Metallverbindungen kommen solche Substanzen in Betracht, die wasserlöslich sind oder unter den Reaktionsbedingungen wasserlöslich werden. Geeignet sind die Oxide, die Salze anorganischer Wasserstoff- und Sauerstoffsäuren, sowie die Salze aliphatischer Mono- und Polycarbonsäuren. Beispiele für geeignete Salze sind die Halogenide, Nitrate, Formiate und Acetale.

Nachfolgend werden die Herstellung sowie die Eigenschaften der neuen Verbindungen anhand ausgewählter Beispiele beschrieben.

### Beispiel 1: Tris(o-tolyl-m-sulfonsäure)phosphin

### (a) Herstellung von Tris(o-tolyl)phosphin

Die Herstellung von Tris(o-tolyl)phosphin erfolgt nach dem in J.Org.Chem. 43, 2941 ff (1978) veröffentlichten Verfahren durch Umsetzung von Phosphortrichlorid mit dem aus o-Bromtoluol erhaltenen Grignardreagenz.

### (b) Sulfonierung von Tris (o-tolyl)phosphin.

In einem Zweihalskolben mit aufgesetztem Tropftrichter löst man 1,63 g (26,28 mmol) Borsäure in 15 ml konzentrierter Schwefelsäure (96 Gew.-%ig) und fügt zu der klaren Lösung in kleinen Anteilen 2 g (6,57 mmol) Tris(o-tolyl)phosphin. Darauf kühlt man den Kolben mit Eis auf etwa 5°C und tropft unter Einhaltung dieser Temperatur und unter Rühren, anfangs langsam, später schneller (d.h. etwa 1 Tropfen/sec), 27 ml Oleum mit einem Gehalt von 65 Gew.-% freiem SO₃ zu. Nach Beendigung der Oleumzugabe enthält das Reaktionsgemisch 31,6 Gew.-% freies SO₃. Man erwärmt die Reaktionslösung auf Raumtemperatur und läßt 3 d nachreagieren.

Zur Aufarbeitung gibt man das Reaktionsgemisch vorsichtig, d.h. unter Vermeidung von Temperaturen oberhalb etwa 20°C, auf Eis.

Die wäßrige Lösung wird mit einem Gemisch aus 69,8 ml Toluol und 65,7 mmol Triisooctylamin 24 h gerührt. Dabei geht das sulfonierte Phosphin als Aminsalz in die organische Phase über. Sie wird isoliert und zur Gewinnung des Phosphins mit 25 Gew.-%iger Natronlauge reextrahiert. Man trennt die wäßrige Phase von der Aminphase ab, neutralisiert sie gegebenenfalls und engt sie mit Hilfe eines Rotationsverdampfers zur Trockne ein. Das erhaltene Rohprodukt kann unmittelbar als Katalysatorkomponente eingesetzt werden.

Zur Gewinnung der reinen Substanz, wie sie z.B. für die stoffliche Charakterisierung erforderlich ist, wird die durch Verdünnen des Reaktionsgemischs mit Eis erhaltene wäßrige Lösung mit 25 Gew.-%iger Natronlauge neutralisiert. Man engt die Lösung mit Hilfe eines Rotationsverdampfers ein, bis größere Mengen Natriumsulfat ausfallen, versetzt die Suspension unter intensivem Rühren mit dem vierfachen Volumen Methanol und filtriert anschließend das Natriumsulfat ab. Der Filterrückstand wird mehrmals mit Methanol nachgewaschen, die Filtrate werden vereinigt und zur Trockene eingeengt. Darauf nimmt man den Rückstand mit möglichst wenig Wasser auf und spritzt die Lösung unter intensivem Rühren in das 10fache Volumen Methanol ein. Es wird erneut filtriert und im Vakuum zur Trockene eingedampft. Zur weiteren Reinigung, insbesondere zur Abtrennung des in geringer Menge vorhandenen Phosphinoxids und unerwünschter Sulfonierungsprodukte chromatografiert man über Sephadex G-25, einem dreidimensional vernetzten Polysaccharid (Hersteller: Pharmacia, AB, Uppsala). Die Ausbeute beträgt 4,02 g, entsprechend 92 % d. Th.

### (c) Analytische Charakterisierung von Trinatrium(o-tolyl-m-sulfonato)phosphin.

Elementaranalyse berechnet für C₂₁H₁₈Na₃O₉PS₃ . 3,4H₂O

| | C | H | P | S | O | Na |
|---|---|---|---|---|---|---|
| berechnet | 37,55 | 3,72 | 4,61 | 14,32 | 29,53 | 10,27 |
| gefunden | 37,48 | 3,72 | 4,70 | 14,02 | 28,03 | 10,60 |

Spektroskopische Daten
³¹P-{¹H}-NMR (161.8 MHz, D₂O): δ = -22.8 ppm (s, 1 P)
¹H-NMR (250 MHz, D₂O): δ = 2.27 ppm (s, 9 H, -CH₃), 7.17 (dd, ³J_{HP} = 3.97 Hz, ⁴J_{HH} = 1.83 Hz, 3 H, H6), 7.35 (dd, ³J_{HH} = 8.09 Hz, ⁴J_{HP} = 4.73 Hz, 3 H, H3), 7.79 (dd, ⁴J_{HH} = 1.52 HZ, 3 JHP = 7.94 Hz, 3 H, H4)
¹³C-{¹H}-NMR (100.5 MHz, D₂O): δ = 146.5 ppm (d, ³J_{CP} = 25.75 Hz, C5), 141.41 (s, Cl), 133.57 (d, ²J_{CP} = 10.97 Hz, C2), 131.3 (d, ³J_{CP} = 4.77 Hz, C3), 129.78 (s, C6), 126.88 (s, C4), 20.65 (d, ³J_{CP} = 20.5 Hz, -CH₃)

UV (nm): 226, 272
IR (KBr, cm⁻¹): 3056 (v(Aryl-H)), 2967, 2575, 222, 1920, 1805, 1637 (sst), 1587 (v(C=C)), 1470, 1446 (Aryl-P), 1380, 2000 (sst, br), 1038 (sst), 904, 827.

### Beispiel 2: Tris(o-methoxy-m-sulfonsäurephenyl)phosphin

### (a) Herstellung von Tris(o-methoxyphenyl)phosphin

Die Herstellung von Tris(o-methoxyphenyl)phosphin erfolgt in Anlehnung an das in J.Org.Chem. 43, 2941 ff (1978) publizierte Verfahren zur Synthese von Tris(o-tolyl)-phosphin durch Umsetzung von Phosphortrichlorid mit dem aus o-Methoxybrombenzol erhaltenen Grignard-Reagenz.

### (b) Sulfonierung von Tris(o-methoxyphenyl)-phosphin

In einem Zweihalskolben mit aufgesetztem Tropftrichter löst man 1,79 g (28,96 mmol) Borsäure in 11,5 ml konzentrierter Schwefelsäure (96,5 Gew.-%ig) und fügt zu der klaren Lösung in kleinen Anteilen 1 g (2,84 mmol) Tris(o-methoxyphenyl)phosphin. Darauf kühlt man den Kolben mit Eis auf etwa 5°C und tropft unter Einhaltung dieser Temperatur und unter Rühren anfangs langsam, später schneller (d.h. etwa 1 Tropfen/sec), 22 ml Oleum mit einem Gehalt von 65 Gew.-% freim SO₃ zu. Nach Beendigung der Oleumzugabe enthält das Reaktionsgemisch 31,4 Gew.-% freies SO₃. Man erwärmt die Reaktionslösung auf Raumtemperatur und läßt 3 d nachreagieren.

Zur Aufarbeitung gibt man das Reaktionsgemisch vorsichtig auf Eis, so daß die Temperatur etwa 20°C nicht übersteigt.

Die wäßrige Lösung wird mit einem Gemisch aus 76,95 ml Toluol und 72,4 mmol Triisooctylamin 24 h gerührt. Dabei geht das sulfonierte Phosphin als Aminsalz in die organische Phase über. Sie wird isoliert und zur Gewinnung des Phosphins mit 25 Gew.-%iger Natronlauge reextrahiert. Man trennt die wäßrige Phase von der Aminphase ab, neutralisiert sie gegebenenfalls und engt sie mit Hilfe eines Rotationsverdampfers zur Trockne ein. Das erhaltene Rohprodukt kann unmittelbar als Katalysatorkomponente eingesetzt werden.

Die Gewinnung der reinen Verbindung erfolgt wie in Beispiel 1 beschrieben durch Chromatographie über Sephadex G-25. Die Ausbeute beträgt 1,86 g, entsprechend 92 % d.Th.

### (c) Spektroskopische Charakterisierung von Trinatrium(o-methoxy-m-sulfonato)phosphin

³¹P-{¹H}-NMR (D₂O): δ = -31.99 (s, 1 P)
¹H-NMR (D₂O): δ = 3.78 (s, 9 H, -OCH₃), 7.20 (dd, ⁴J_{HP} = 8.9 Hz, ³J_{HH} = 4.6 Hz, 3 H, H3), 7.24 (dd, ⁴J_{HH} = 2.1 Hz, ³J_{HH} = 4.6 Hz, 3 H, H4), 7.93 (dd, ⁴J_{HH} = 2.1 Hz, ³J_{PH} = 9.6 Hz, 3 H, H6)
¹³C-{¹H}-NMR (D₂O): δ = 56.24 (s, C7), 111.41 (s, C4), 122.17 (d, ³J_{CP} = 11.5 Hz, C5), 129.31 (s, C6), 131.05 (d, ³J_{CP} = 2.9 Hz, C3), 136.78 (d, ²J_{CP} = 1.0 Hz, Cl), 163.12 (d, ²J_{CP} = 14.8 Hz, C2).

### Beispiel 3: Bis(tert-butyl)(o-tolyl-m-sulfonsäure)phosphin

### (a) Herstellung von Bis(tert-butyl) (o-tolyl)phosphin

Die Herstellung von Bis(tert-butyl)(o-tolyl)phosphin erfolgt nach dem in J.Org.Chem. 43, 2941 ff (1978) veröffentlichten Verfahren durch Umsetzung von Di(tert-butyl)-chlorophosphin mit dem aus o-Bromtoluol erhaltenen Grignardreagenz.

### (b) Sulfonierung von Bis(tert-butyl) (o-tolyl)phosphin

In einem Einhalskolben löst man 1.63 g (26.28 mmol) Orthoborsäure in 9 ml konzentrierter Schwefelsäure (96 Gew.-%) und tropft 7 ml Oleum (65 Gew.-% SO₃) zu, so daß im Sulfonierungsgemisch eine SO₃-Konzentration von etwa 0.6 Gew.-% resultiert. Das überschüssige SO₃ wird innerhalb 45 min bei 60°C im Hochvakuum entfernt. Anschließend setzt man 300 mg (1.32 mmol) Bis(tert-butyl) (o-tolyl)-phosphin zu (entsprechend einem Borsäure/Phosphin-Molverhältnis von 20/l) und rührt, bis sich das Phosphin gelöst hat. Das Reaktionsgemisch wird 21 h auf 60°C erhitzt, darauf abgekühlt und mit 20 ml entgastem Wasser hydrolysiert.

Die wäßrige Lösung wird mit einer Lösung von 4 ml (9.25 mmol) Triisooctylamin in 30 ml Toluol 24 h gerührt. Zur Gewinnung des sulfonierten Amins extrahiert man die organische Phase mit 25 Gew.-%iger Natronlauge und trennt die wäßrige Phase von der Aminphase. Die wäßrige Phosphinsulfonatlösung wird neutralisiert und gegebenenfalls zur Trockene eingeengt. Das erhaltene Rohprodukt kann unmittelbar als Katalysatorkomponente eingesetzt werden.

Die Gewinnung der reinen Verbindung erfolgt, wie in Beispiel 1 beschrieben, durch Chromatographie über Sephadex G-25. Die Ausbeute beträgt 444 mg, entsprechend 95 % d.Th.

### (c) Spektroskopische Charakterisierung von Bis(tert-butyl) (o-tolyl-m-sulfonat)phosphin als Natriumsalz

³¹P-{¹H}-NMR (D₂O): δ = 16.20 (s, 1 P)
¹H-NMR (D₂O): δ = 1.22 (d, ³J_{HP} = 12.52 Hz, 18 H, H9), 2.62 (s, 3 H, -CH₃), 7.46 (dd, ³J_{HH} = 8.2 Hz, ⁴J_{HH} = 4.3 Hz, 1 H, H4), 7.76 (d, ³J_{HH} = 8.2 Hz, 1 H, H3), 8.27 (s, 1 H, H6)
¹³C-{¹H}-NMR (D₂O): δ = 23.03 (d, ³J_{CP} = 24.3 Hz, C9), 29.16 (s, C7), 32.26 (d, ¹J_{CP} = 16.2 Hz, C8), 126.30 (s, C6), 130.72 (d, ³J_{CP} = 5.7 Hz, C3), 132.25 (d, ⁴J_{CP} = 4.3, C4), 135.23 (d, ²J_{CP} = 10.6 Hz, C2), 140.13 (s, Cl), 148.72 (d, ³J_{CP} = 27.65 Hz, C5).

## Patentansprüche

1. Sulfonierte Phosphine der allgemeinen Formel 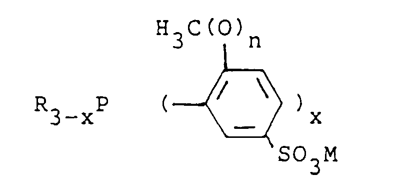 in der R einen Alkylrest mit 1 bis 4 Kohlenstoffatomen oder den Cyclohexylrest bedeutet, M Wasserstoff, ein einwertiges Metall, das chemische Äquivalent eines mehrwertigen Metalls, das Ammoniumion oder ein alkyl- oder arylsubstituiertes Ammoniumion ist und x für die Zahlen 1, 2 oder 3 sowie n für die Zahlen 0 oder 1 stehen.

2. Verfahren zur Herstellung sulfonierter Phosphine nach Anspruch 1, dadurch gekennzeichnet, daß man Tris(o-tolyl)phosphin oder Tris(o-methoxyphenyl)phosphin bzw. Derivate dieser Verbindungen, in denen ein oder zwei Arylreste durch Alkylreste mit 1 bis 4 Kohlenstoffatomen oder den Cyclohexylrest ersetzt sind, mit dem wasserfreien System Schwefelsäure/Orthoborsäure oder mit Oleum als Sulfonierungsreagenz umsetzt.

3. Verfahren nach Anspruch 2, dadurch gekennzeichnet, daß man die Sulfonierung mit dem wasserfreien System Schwefelsäure/Orthoborsäure bei 20 bis 350°C, insbesondere 20 bis 170°C, durchführt.

4. Verfahren nach Anspruch 2, dadurch gekennzeichnet, daß man die Sulfonierung mit einer Lösung von Schwefeltrioxid in Schwefelsäure, insbesondere einer Lösung, die 20 bis 65 Gew.-% Schwefeltrioxid, bezogen auf die Lösung enthält, durchführt.

5. Verfahren nach Anspruch 4, dadurch gekennzeichnet, daß die Lösung von Schwefeltrioxid in Schwefelsäure eine Lewis-Säure enthält.

6. Verfahren nach Anspruch 5, dadurch gekennzeichnet, daß die Lewis-Säure Borsäure ist.

7. Verfahren nach den Ansprüchen 3 oder 6, dadurch gekennzeichnet, daß je mol P(III) mindestens 1 mol Borsäure vorliegt.

8. Verfahren nach einem oder mehreren der Ansprüche 2 bis 7, dadurch gekennzeichnet, daß das Sulfonierungsgemisch mit Wasser verdünnt und die erhaltene wäßrige Lösung mit der Lösung eines wasserunlöslichen Amins in einem wasserunlöslichen organischen Lösungsmittel extrahiert wird, wobei je chemisches Äquivalent Sulfonsäure 0,5 bis 3 mol des Amins angewandt werden, die organische Phase abgetrennt und mit der wäßrigen Lösung einer Base in innige Berührung gebracht, darauf die wäßrige Phase abgetrennt und aus dieser das sulfonierte Arylphosphin isoliert wird.

9. Verfahren nach Anspruch 8, dadurch gekennzeichnet, daß als wasserunlösliches Amin Triisooctylamin verwendet wird.

10. Verfahren nach Anspruch 8 oder 9, dadurch gekennzeichnet, daß als wasserunlösliches Lösungsmittel Toluol verwendet wird.

## Claims

1. A sulfonated phosphine of the formula 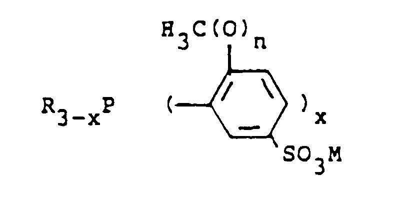 in which R is an alkyl radical having 1 to 4 carbon atoms or the cyclohexyl radical, M is hydrogen, a monovalent metal, the chemical equivalent of a polyvalent metal, the ammonium ion or an alkyl- or aryl-substituted ammonium ion, x is the number 1, 2 or 3 and n is the number 0 or 1.

2. A process for the preparation of a sulfonated phosphine as claimed in claim 1, which comprises reacting tris(o-tolyl)phosphine or tris(o-methoxy)-phenylphosphine or a derivative of one of these compounds in which one or two aryl radicals are replaced by alkyl radicals having 1 to 4 carbon atoms or the cyclohexyl radical, with the anhydrous system of sulfuric acid/orthoboric acid or with oleum as a sulfonating reagent.

3. The process as claimed in claim 2, wherein the sulfonation is carried out with the anhydrous system of sulfuric acid/orthoboric acid at 20 to 350°C, in particular 20 to 170°C.

4. The process as claimed in claim 2, wherein the sulfonation is carried out with a solution of sulfur trioxide in sulfuric acid, in particular a solution which comprises 20 to 65 % by weight of sulfur trioxide, based on the solution.

5. The process as claimed in claim 4, wherein the solution of sulfur trioxide in sulfuric acid comprises a Lewis acid.

6. The process as claimed in claim 5, wherein the Lewis acid is boric acid.

7. The process as claimed in claims 3 or 6, wherein at least 1 mol of boric acid is present per mole of P(III).

8. The process as claimed in one or more of claims 2 to 7, wherein the sulfonation mixture is diluted with water and the resulting aqueous solution is extracted with a solution of a water-insoluble amine in a water-insoluble organic solvent, 0.5 to 3 mol of the amine being used per chemical equivalent of sulfonic acid, the organic phase is separated off and brought into intimate contact with an aqueous solution of a base, the aqueous base is then separated off and the sulfonated arylphosphine is isolated from this.

9. The process as claimed in claim 8, wherein triisooctylamine is used as the water-insoluble amine.

10. The process as claimed in claim 8 or 9, wherein toluene is used as the water-insoluble solvent.

## Revendications

1. Phosphines sulfonées de formule générale 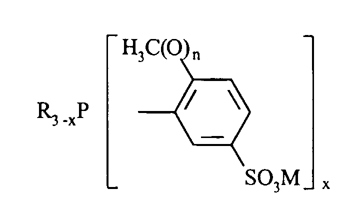 dans laquelle R représente un reste alkyle de 1 à 4 atomes de carbone ou le reste cyclohexyle, M est un atome d'hydrogène, un métal monovalent, l'équivalent chimique d'un métal polyvalent, l'ion ammonium ou un ion ammonium substitué par alkyle ou aryle, et x représente le nombre 1, 2 ou 3 et n le nombre 0 ou 1.

2. Procédé de préparation de phosphines sulfonées selon la revendication 1, caractérisé en ce que l'on fait réagir la tris(o-tolyl)phosphine ou la tris(o-méthoxyphényl)phosphine ou des dérivés de ces composés dans lesquels un ou deux restes aryle sont remplacés par des restes alkyle de 1 à 4 atomes de carbone ou par le reste cyclohexyle, avec le système anhydre acide sulfurique/acide orthoborique ou avec de l'oléum comme réactif de sulfonation.

3. Procédé selon la revendication 2, caractérisé en ce que l'on effectue la sulfonation avec le système anhydre acide sulfurique/acide orthoborique à une température de 20 à 350°C, en particulier de 20 à 170°C.

4. Procédé selon la revendication 2, caractérisé en ce que l'on effectue la sulfonation avec une solution de trioxyde de soufre dans de l'acide sulfurique, en particulier une solution contenant 20 à 65 % en masse de trioxyde de soufre par rapport à la solution.

5. Procédé selon la revendication 4, caractérisé en ce que la solution de trioxyde de soufre dans l'acide sulfurique contient un acide de Lewis.

6. Procédé selon la revendication 5, caractérisé en ce que l'acide de Lewis est l'acide borique.

7. Procédé selon la revendication 3 ou 6, caractérisé en ce qu'il y a au moins une mole d'acide borique par mole de P(III).

8. Procédé selon l'une ou plusieurs des revendications 2 à 7, caractérisé en ce que l'on dilue le mélange de sulfonation avec de l'eau et on extrait la solution aqueuse obtenue avec la solution d'une amine insoluble dans l'eau dans un solvant organique insoluble dans l'eau en utilisant 0,5 à 3 mol d'amine par équivalent chimique d'acide sulfonique, on sépare la phase organique et on l'amène en contact intime avec une solution aqueuse d'une base, puis on sépare la phase aqueuse et on en isole l'arylphosphine sulfonée.

9. Procédé selon la revendication 8, caractérisé en ce que l'on utilise de la triisooctylamine comme amine insoluble dans l'eau.

10. Procédé selon la revendication 8 ou 9, caractérisé en ce que l'on utilise du toluène comme solvant insoluble dans l'eau.
